# EUROPEAN PATENT SPECIFICATION

(11) **EP 1 885 088 B1**
(45) Date of publication and mention of the grant of the patent: **17.12.2008**
(21) Application number: 06291279.5
(22) Date of filing: 04.08.2006
(51) Int. Cl.: H04L 12/56

(54) **Routing device, routing module and routing method for an access network**
Vorrichtung, Modul und Verfahren zur Leitweglenkung für ein Zugangsnetz
Appareil, module et procédé de routage pour un réseau d'accès

(43) Date of publication of application: 06.02.2008
(73) Proprietor: Alcatel Lucent, 75008 Paris (FR)
(72) Inventor: Rezaki, Ali, 92130 Issy-Les-Moulineaux (FR); van den Abeele, Jan, 9940 Evergem (BE)
(74) Representative: Schneider, Sandra

(56) References cited:
- WO-A-02/071720
- US-A1- 2003 079 027
- MARIN LOPEZ R ET AL: "Implementing RADIUS and Diameter AAA Systems in IPv6-Based Scenarios" ADVANCED INFORMATION NETWORKING AND APPLICATIONS, 2005. AINA 2005. 19TH INTERNATIONAL CONFERENCE ON TAIPEI, TAIWAN 25-30 MARCH 2005, PISCATAWAY, NJ, USA,IEEE, 25 March 2005 (2005-03-25), pages 851-855, XP010790123 ISBN: 0-7695-2249-1
- KATABI D ET AL: "A FRAMEWORK FOR SCALABLE GLOBAL IP-ANYCAST (GIA)" COMPUTER COMMUNICATION REVIEW, ACM, NEW YORK, NY, US, vol. 30, no. 4, October 2000 (2000-10), pages 3-15, XP001063482 ISSN: 0146-4833

## Description

The invention relates to a routing device for an access network, a routing module therefor and a routing method for an access network.

Known routers use as a possible routing strategy an algorithm to calculate the shortest path tree, e.g. the OSPF protocol (OSPF = The Open Shortest Path First). The OSPF protocol is a link-state, hierarchical interior gateway protocol (IGP) for network routing.

The router forwards an Internet protocol message in accordance with the link cost or closeness criteria to the closest destination device to which the anycast address is assigned. If therefore a given message is sent by users which are subscribers to different service providers, for example network or internet service providers, the router sends according to his OSPF behavior the anycast message in any case to the closest destination device having anycast address of the message. The destination device is for example a DNS server (DNS = Domain Name System).

It is therefore an object of the invention to provide a routing device, a routing module and a routing method for forwarding of messages with an anycast address to a suitable, in particular to a service provider specific, destination device.

This object is attained by a routing device according to the teaching of claim 1, by a routing module and a method according to the teachings of further independent claims.

The routing device may be for example an Access Multiplexer, an edge router of an access network, in particular of an aggregation network.

It is also possible that the routing device or a routing module is a software with program code, that may be executed by a processor of the routing device. By processing the program code the routing device, e.g. a network node, is able to perform the steps mentioned above. The program module may comprise for example virtual router modules, routing tables and the like.

The idea underlining the invention is to use credential data, for example authentication and authorization information or subscription data, as basis for a resolution of an anycast address. The credential data is for example the basis for an assignment or linking of the sending device to the related destination devices. The assignment may be deducted or derived from the credential data. Also a server can send the assignment data to the routing device or module based on the credential data. It is also possible that the assignment data or information is already stored at the routing device or module and that the routing device or module activates the assignment data or links the sending device to the possible or preferred destination devices based on the credential data.

The routing device may for example retain some credential data during an authentication procedure. The procedure is for example performed as a login process from a user of the sending device at a network of his service provider. The credential data and/or the assignment data is for example communicated between the routing device and a RADIUS server (RADIUS = Remote Authentication Dial In User Service). The RADIUS server may send the assignment data to the routing device. The sending device is e.g. associated with a server of its server provider. The server is for example a DNS server, a SIP server, a NTP server or the like (DNS = Domain name system, SIP = Session Initiation Protocol, NTP = Network Time Protocol). The routing device or router module sends the message to the server associated with the sending device rather than forwarding the message with the anycast address to the closest server as known in the art.

It is therefore possible that for example two sending devices send messages to the routing device or module with the same anycast address. The routing device sends the messages with the same anycast address to different destination devices respectively linked to the sending device. The routing device determines the destination device based on the credential data formerly sent by the respective sending device. Therefore, the routing device forwards a message with a given anycast address sent by a first sending device to a first destination device of a first service provider, whereas the routing device forwards a second message with the same anycast address sent by a second sending device to a second destination device of a second service provider. Both destination devices belong to the same group or type of destination devices and have the same anycast addresses. Even if the first and the second destination devices are at different distances from the routing device, the routing device forwards the respective message to that first or second destination device to which the users of the first or second sending device or the first and second devices are so to say linked in accordance with the invention.

The term "sending device" can comprise also a sending software modul run by a sending device, e.g. a personal computer. A personal computer can for example process program code of a first and a second sending modul of a first and a second user of the personal computer.

The term "group of destination devices" relates to destination devices having the same anycast address. The destination devices of the group have preferably the same functionality, for example a domain name service function, functions for Internet telephony, functions for providing real time or any other services, preferably services of a telecommunication network. Those services may include for example also navigation services, content providing services or the like.

The routing device or module comprise preferably a first and at least a second routing table. The routing tables are assigned to the respective service providers. The routing device uses the first and at least second routing tables to determine the first or second destination device. The routing tables comprise for example an address information of the destination device. It is also possible for the routing table to comprise as a forwarding information for example a port information about a port through which the message with the anycast address shall be forwarded. For example a first port is dedicated to the first possible destination device whereas a second port is assigned to the at least one second possible destination device.

A preferred embodiment of the invention provides that the routing device, e.g. its forwarding means, comprise a first and at least one second virtual router. The first and second virtual routers are assigned to a first and a second service provider. If the message is for example sent by a first sending device of a first user, the first virtual router forwards it to destination devices of the first service provider. If a message with the same anycast address as the afore-mentioned message is received from a sending device of a second user who is a subscriber of a second service provider, the second virtual router assigned to that second sending device processes the message and forwards it to suited destination devices of said second service provider. The first virtual router may use the first routing table, the at least one second virtual router the at least one second routing table.

In this connection it shall be emphasized that the routing device may proceed with known routing strategies if the inventive routing strategy fails or subsequent to the inventive routing strategy. If for example the message with an anycast address cannot be forwarded based on the credential data according to the inventive concept the message may be forwarded according to the OSPF (OSPF = The Open Shortest Path First). It may also be possible that two destination devices of a given service provider have the same anycast address. Upon determination of two possible destination devices based on the credential data the routing device or module may for example route the message to the destination device being the closest to the routing device and/or having a lower workload and/or having a higher processing capacity or the like than a second possible destination device.

The routing device or module may replace or amend the anycast address by the address of the destination device to which the message shall be sent. It is also possible that the routing device leaves the anycast address unchanged and forwards the respective message to a port assigned to the respective determined destination device or assigned to a network in which the respective determined destination device is located.

The invention will be come more apparent by reference to the following description of several embodiments taken in conjunction with the accompanying drawings in which:

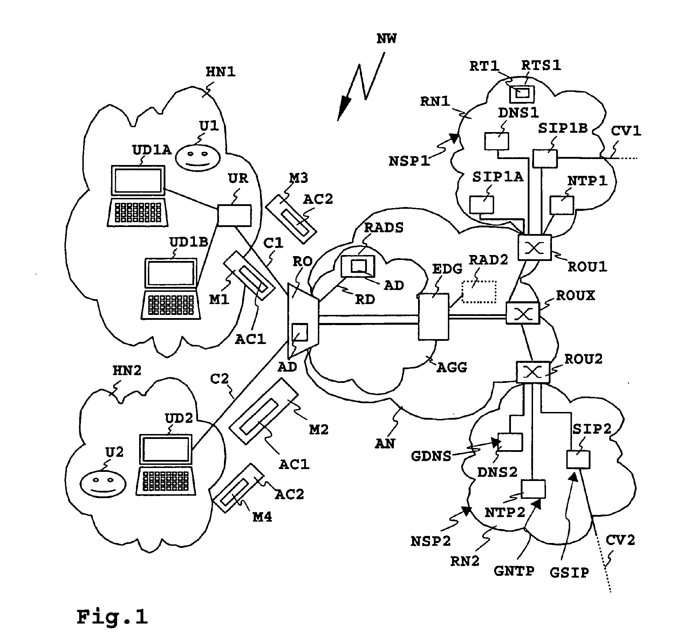

- Fig. 1: is a functional diagram with sending devices connected via a routing device to an access network,

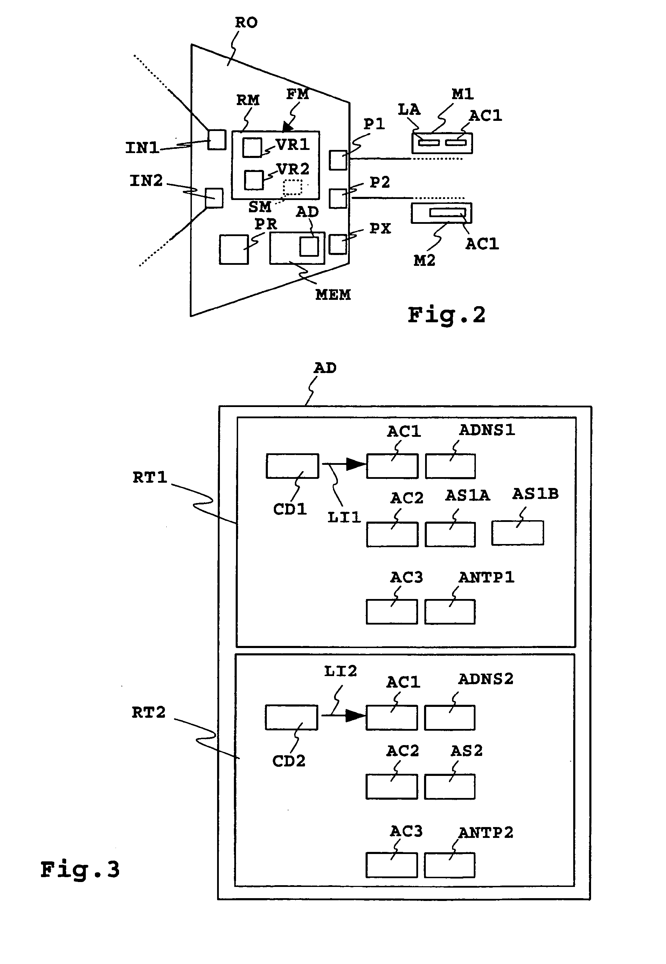

- Fig. 2: a functional diagram of the routing device in accordance with figure 1, and
- Fig. 3: assignment data of the routing device of figure 2.

A telecommunications network NW comprises user networks or home networks HN1, HN2 of users U1, U2 connected via an access network AN with regional networks RN1, RN2 of service providers NSP1, NSP2. The service provider NSP1, NSP2 are network service providers, for example internet service providers.

User U1 has user or sending devices UD1A, UD1B which can established a connection C₁ by means of a local router UR of the home network HN1. The router UR is connected with a routing device RO of the access network AN.

A user device UD2 which subsequently will perform the role of a sending device is connected by a connection C2 with the routing device RO.

The user devices UD1A, UD1B, UD2 are for example personal computers, notebooks, PDAs (Personal Digital Assistants) or the like.

The connections C1, C2 are established e.g. on Digital Subscriber Lines (DSL), telephone lines or the like.

The routing device RO is for example an access node of the access network AN and more specifically an access node of an aggregation network AGG, which is part of the access network ANN. The routing device may be for example an Access Multiplexer, for example DSLAM (Digital Subscriber Line Access Multiplexer).

The access network ANN is connected via routers ROUX, ROU1, ROU2 with the regional networks RN1, RN2. The service providers SIP1, NSP2 provide access to further networks, for example the Internet via connections CV1, CV2.

In order to use the services of the service providers NSP1, NSP2 the user devices UD1A, UD1B and/or the local router UR of the user U1 and user device UD2 of the user U2 need to login at the access node or routing device RO. The login or authentication procedure for the home network AN1 is performed by the router UR in which credential data CD1 of user U1, for example so-called AAA data may be stored (AAA = Authentication, Authorization, Accounting). The credential data CD2 of user U2 may be only partially stored at the user device UD2. The user UD2 inputs at least partially credential data, for example its user name and/or password during a login procedure at the routing device RO.

During an authentication procedure the routing device RO communicates with a RADIUS server RADS via a connection RD. The RADIUS server RADS is part of the aggregation network AGG. It may also be the case that a RADIUS server, e.g. a second RADIUS server RAD2, is located at a different location in the aggregation network AN and may be for example communicate via an IP edge device EDG with the routing device RO.

The routing device RO evaluates and/or stores at least partially the credential data CD1, CD2, communicated during the authentication and authorization procedure. The credential data CD1, CD2 is later on the basis in accordance with the invention to forward anycast addresses which will be apparent by the explanations below:

The routing device RO uses the credential data CD1, CD2 to determine a suitable or appropriate destination device for message sent by devices of the home networks HN1, HN2 to an appropriate destination device.

The routing device RO assigns e.g. input ports IN1, IN2 to the home networks HN1 and HN2 based on the credential data CD1, CD2.

The routing device RO comprises furthermore a memory MEM in which assignment data AD is stored. The assignment data comprises links LI1, LI2 between the credential data CD1, CD2 and the destination devices DNS1, SIP1A, SIP1B, NTP1, DNS2, SIP2, NTP2 comprised in the regional networks RN1, RN2.

The assignment data AD comprise for example routing tables RT1, RT2. In the routing table RT1 an anycast address AC1, for example an Internet address, is linked via the link LI1 to an address ADNS1 of the DNS server DNS1. The anycast address AC1 is assigned to a group of destination devices having mainly the same functionality, in particular to a group GDNS with DNS servers DNS1, DNS2 of the service providers NSP1, NSP2.

The anycast address AC1 may be an address of an address range of the Internet protocol version 6 reserved for anycast addresses of different types. Furthermore, a second anycast address AC2 is linked to addresses AS1A, AS1B of SIP servers S1A, S1B of the regional network RN1 (SIP = Session Initiation Protocol).

A third anycast address AC3 is linked to an address ANTP1 of an NTP server NTP1 of the regional network RN2 (NTP = Network Time Protocol).

In the routing table RT2 the credential data CD2 is linked via the link LI2 with addresses ADNS2 and ANTP2 of the DNS server DNS2, a SIP server SIP2 and a NTP server NTP2 of the regional network RN2.

The SIP servers SIP1A, SIP1B and SIP2 perform SIP internet telephony services for the home networks HN1, HN2 of the users U1, U2. The SIP servers SIP1A, SIP1B and SIP2 belong to a group of SIP servers GSIP having the same anycast address AC2.

The NTP servers NTP1, NTP2 have the same anycast address AC3 and belong to a group of NTP servers GNTP.

The groups GNTP, GSIP and GDNS may contain further servers of the network providers NSP1, NSP2 or of further regional networks and/or service providers (not shown in the figure).

The home network HN1, for example the user device UD1A or UD1B, sends for example a message M1, e.g. a UDP or TCP message (UDP = User Datagram Protocol, TCP = Transmission Control Protocol) with the anycast address AC1 to the routing device RO. The routing device RO receives the message M1 at the input port IN1. Forwarding means FM, for example a software with program code executable by a processor PR of the routing device RO, forwards messages received at the port IN1 to a virtual router VR1.

The virtual router VR1 is assigned to the home network HN1 in accordance with a credential data CD1. The virtual router VR1 forwards the message M1 via a port P1 to the regional network RN1 of the internet service provider NSP1. The anycast address AC1 may be unchanged. The port P1 is dedicated to the regional network RN1. Routers ROUX, ROU1 forward the message M1 to the domain name server or destination device DNS1 upon further analysis of the anycast address AC1.

It is also possible that the routing device RO replaces the anycast address AC1 by the address ADNS1 of the DNS server DNS1. Then, the dedicated port P1 is not necessary. The routing device RO can in this scenario forward the message M1 via any port, e.g. a port PX, connected to the regional network RN1. The routers ROUX, ROU1 forward the message M1 to the domain name server or destination device DNS1 based on the address ADNS1 contained instead of the anycast address AC1 in the message M1.

If however a message M2 with the same anycast AC1 is sent by the user device UD2, the routing device RO receives the message M2 at an input port IN2. Accordingly, the forwarding means FM forwards the message M2 to a virtual router VR2 which in turn forwards the message M2 via a port P2 to the regional network RN2.

The routing tables RT1, RT2 may be assigned to the virtual routers VR1, VR2.

It is also possible that a single routing module SM is executed by the processor PR and that the module SM uses dependent on the origination of a message either the routing table RT1 or the routing table RT2 to forward the message to one of the destination devices DNS1, DNS2 or NTP1, NTP2 or the SIP servers SIP1A, SIP1B or SIP2. The module SM may for example determine the origination of the message M1 determine based on a origination address LA of the local router UR contained in the message M1.

If the user U1 requests internet telephony services, the user device UD1A sends for example a message M3 comprising the anycast address AC2 to the routing device RO. Accordingly, the routing device RO forwards the message M3 to either the SIP server SIP1A or SIP1B. The routing device RO may choose the appropriate SIP server SIP1A, SIP1B by means of other criteria, for example may choose the SIP server SIP1B which is closer to the routing device RO than the SIP server SIP1A. The routing device RO can replace the anycast address AC1 by the address AS1B of the SIP server SIP1B.

It is also possible that the routing device RO forwards the message M3 with the unchanged anycast address AC2. Then, a router of the regional network RN1, e.g. router ROU1, forwards the message M3 to either the SIP server SIP1A or SIP1B depending on other criteria, e.g. the link cost or closeness criteria.

If however the message M4 with the same anycast address AC1 is sent from the home network HN2, the routing device RO forwards the message M4 to the SIP server SIP2 in accordance with the routing table RT2.

The routing tables RT1, RT2 may be sent by the RADIUS servers RADS, RAD2 to the routing device RO. It is also possible that a special server of the respective service provider sends the routing tables to a routing device in accordance with the invention. For example a server RTS1 of the regional network RN1 and/or the service provider NSP1 sends the routing table RT1 to the routing device RO.

## Claims

1. Routing device for an access network (AN), wherein said routing device (RO) comprises forwarding means (FM) able to determine a destination device for a message (M1, M2) sent by a sending device (UD1A, UD1B, UD2), said message (M1, M2) containing an anycast address (AC1, AC2, AC3) being assigned to a first possible destination device (DNS1, SIP1A, SIP1B, NTP1) and at least one second possible destination device (DNS2, SIP2, NTP2) of a group of destination devices (GDNS, GSIP, GNTP), **characterized in that** said forwarding means (FM) are able to determine said first destination device (DNS1, SIP1A, SIP1B, NTP1) or said at least one second possible destination device (DNS2, SIP2, NTP2) out of said group of destination devices (GDNS, GSIP, GNTP) by assignment data (AD), said assignment data (AD) comprising a link (LI1, LI2) between said sending device (UD1A, UD1B, UD2) and said destination device for said message (M1, M2), and **in that** said assignment data (AD) comprise credential data (CD1, CD2) and/or are determined by means of credential data (CD1, CD2) of a user (U1, U2) of said sending device (UD1A, UD1B, UD2).

2. Routing device according to claim 1, wherein said forwarding means (FM) are able to monitor or receive said credential data (CD1, CD2) of said user (U1, U2) during an authentication procedure.

3. Routing device according to claim 1, wherein said forwarding means (FM) are able to communicate with a server (RADS), in particular a RADIUS server, providing at least partly said assignment data (AD) by an authentication, authorization and accounting protocol.

4. Routing device according to claim 1, wherein said first destination device (DNS1, SIP1A, SIP1B, NTP1) is part of a network (RN1) of a first service provider (NSP1) and said at least one second destination device (DNS2, SIP2, NTP2) is part of a network (RN2) of a second service provider (NSP2).

5. Routing device according to claim 4, wherein said assignment data (AD) comprise a first routing table (RT1) assigned to said first service provider (NSP1) and a second routing table (RT2) assigned to said second service provider (NSP2), said routing tables (RT1, RT2) being determined or used dependent on said credential data (CD1, CD2), said first routing table (RT1) comprising a forwarding information, in particular an address, of said first destination device (DNS1, SIP1A, SIP1B, NTP1) and said second routing table (RT2) comprising a forwarding information, in particular an address, of said at least one second destination device (DNS2, SIP2, NTP2).

6. Routing device according to claim 4, wherein said forwarding means (FM) comprise a first virtual router (VR1) assigned to said first service provider (NSP1) and a second virtual router (VR2) assigned to said second service provider (NSP2), said forwarding means (FM) being able to forward said message (M1, M2) to said first virtual router (VR1) or said second virtual router (VR2) dependend on said credential data (CD1, CD2) of a user (U1, U2) of said sending device (UD1A, UD1B, UD2).

7. Routing device according to claim 1, wherein said forwarding means (FM) are able to replace or to amend said anycast address (AC1, AC2, AC3) by an address (ADNS1, ADNS2, AS1A, AS1B, AS2, ANTP1, ANTP2) of the respective determined destination device and/or to forward said message (M1, M2) through a port (P1, P2) assigned to the respective determined destination device.

8. Routing device according to claim 1, **characterized in that** it is an Access Multiplexer or an edge router of the access network (AN).

9. Routing device according to claim 1, wherein a first and at least one second possible destination device (DNS2, SIP2, NTP2) comprise a DNS server (DNS = Domain name system) or a SIP server (SIP = Session Initiation Protocol) or NTP server (NTP = Network Time Protocol).

10. Routing method for an access network (AN), a routing device (RO) determines a destination device for a message (M1, M2) sent by a sending device (UD1A, UD1B, UD2), said message (M1, M2) containing an anycast address (AC1, AC2, AC3) being assigned to a first and at least one second possible destination device (DNS2, SIP2, NTP2) of a group of destination devices (GDNS, GSIP, GNTP), **characterized in that** said routing device (RO) determines said first destination device (DNS1, SIP1A, SIP1B, NTP1) or said at least one second possible destination device (DNS2, SIP2, NTP2) out of said group of destination devices (GDNS, GSIP, GNTP) by assignment data (AD), said assignment data (AD) comprising a link (LI1, LI2) between said sending device (UD1A, UD1B, UD2) and said destination device for said message (M1, M2), and **in that** said assignment data (AD) comprise credential data (CD1, CD2) and/or are determined by means of credential data (CD1, CD2) of a user (U1, U2) of said sending device (UD1A, UD1B, UD2).

11. Routing module (RM) for a routing device (RO), the routing module (RM) comprising program code executable by a processor of the routing device (RO), the execution of the program code enabling the routing device (RO) to perform the functions according to the method of claim 10.

## Patentansprüche

1. Vorrichtung zur Leitweglenkung für ein Zugangsnetz (AN), wobei die Vorrichtung zur Leitweglenkung (RO) Weiterleitungsmittel (FM) umfasst, welche fähig sind, eine Zielvorrichtung für eine von einer Sendevorrichtung (UD1A, UD1B, UD2) gesendete Nachricht (M1, M2) zu ermitteln, wobei die besagte Nachricht (M1, M2) eine Anycast-Adresse (AC1, AC2, AC3), welche einer ersten möglichen Zielvorrichtung (DNS1, SIP1A, SIP1B, NTP1) und mindestens einer zweiten möglichen Zielvorrichtung (DNS2, SIP2, NTP2) einer Gruppe von Zielvorrichtungen (GDNS, GSIP, GNTP) zugeordnet ist, enthält, **dadurch gekennzeichnet, dass** die besagten Weiterleitungsmittel (FM) fähig sind, die besagte erste Zielvorrichtung (DNS1, SIP1A, SIP1B, NTP1) oder die besagte mindestens zweite mögliche Zielvorrichtung (DNS2, SIP2, NTP2) aus der besagten Gruppe von Zielvorrichtungen (GDNS, GSIP, GNTP) anhand von Zuordnungsdaten (AD) zu ermitteln, wobei die besagten Zuordnungsdaten (AD) einen Link (LI1, LI2) zwischen der besagten Sendevorrichtung (UD1A, UD1B, UD2) und der besagten Zielvorrichtung für die besagte Nachricht (M1, M2) umfassen, und dass die besagten Zuordnungsdaten (AD) Beglaubigungsdaten (CD1, CD2) enthalten und/oder anhand von Beglaubigungsdaten (CD1, CD2) eines Nutzers (U1, U2) der besagten Sendevorrichtung (UD1A, UD1B, UD2) ermittelt werden.

2. Vorrichtung zur Leitweglenkung nach Anspruch 1, wobei die besagten Weiterleitungsmittel (FM) fähig sind, die besagten Beglaubigungsdaten (CD1, CD2) des besagten Nutzers (U1, U2) während einer Authentifizierungsprozedur zu überwachen oder zu empfangen.

3. Vorrichtung zur Leitweglenkung nach Anspruch 1, wobei die besagten Weiterleitungsmittel (FM) fähig sind, mit einem Server (RADS), insbesondere einem RADIUS-Server, zu kommunizieren, welcher mindestens teilweise die besagten Zuordnungsdaten (AD) durch ein Authentifizierungs, Autorisierungs- und Accounting-Protokoll bereitstellt.

4. Vorrichtung zur Leitweglenkung nach Anspruch 1, wobei die besagte erste Zielvorrichtung (DNS1, SIP1A, SIP1B, NTP1) ein Teil eines Netzwerks (RN1) eines ersten Diensteanbieters (NSP1) und die besagte mindestens eine zweite Zielvorrichtung (DNS2, SIP2, NTP2) ein Teil eines Netzwerks (RN2) eines zweiten Diensteanbieters (NSP2) ist.

5. Vorrichtung zur Leitweglenkung nach Anspruch 4, wobei die besagten Zuordnungsdaten (AD) eine erste Routing-Tabelle (RT1), welche dem besagten ersten Diensteanbieter (NSP1) zugeordnet ist, und eine zweite Routing-Tabelle (RT2), welche dem besagten zweiten Diensteanbieter (NSP2) zugeordnet ist, umfassen, wobei die besagten Routing-Tabellen (RT1, RT2) in Abhängigkeit von den besagten Beglaubigungsdaten (CD1, CD2) bestimmt oder verwendet werden, wobei die besagte erste Routing-Tabelle (RT1) eine Weiterleitungsinformation, insbesondere eine Adresse, der besagten ersten Zielvorrichtung (DNS1, SIP1A, SIP1B, NTP1), und die besagte zweite Routing-Tabelle (RT2) eine Weiterleitungsinformation, insbesondere eine Adresse, der besagten mindestens einen zweiten Zielvorrichtung (DNS2, SIP2, NTP2) umfasst.

6. Vorrichtung zur Leitweglenkung nach Anspruch 4, wobei die besagten Weiterleitungsmittel (FM) einen ersten virtuellen Router (VR1), welcher dem besagten ersten Diensteanbieter (NSP1) zugeordnet ist, und zweiten virtuellen Router (VR2), welcher dem besagten zweiten Diensteanbieter (NSP2) zugeordnet ist, umfassen, wobei die besagten Weiterleitungsmittel (FM) fähig sind, die besagte Nachricht (M1, M2) an den ersten virtuellen Router (VR1) oder den besagten zweiten virtuellen Router (VR2) in Abhängigkeit von den besagten Beglaubigungsdaten (CD1, CD2) eines Nutzers (U1, U2) der besagten Sendevorrichtung (UD1A, UD1B, UD2) zu senden.

7. Vorrichtung zur Leitweglenkung nach Anspruch 1, wobei die besagten Weiterleitungsmittel (FM) fähig sind, die besagte Anycast-Adresse (AC1, AC2, AC3) durch eine Adresse (ADNS1, ADNS2, AS1A, AS1B, ANTP1, ANTP2) der entsprechenden ermittelten Zielvorrichtung zu ersetzen oder abzuändern, und/oder die besagte Nachricht (M1, M2) über einen der entsprechenden ermittelten Zielvorrichtung zugeordneten Port (P1, P2) weiterzuleiten.

8. Vorrichtung zur Leitweglenkung nach Anspruch 1, **dadurch gekennzeichnet, dass** sie ein Zugangsmultiplexer oder ein Kanten-Router des Zugangsnetzes (AN) ist.

9. Vorrichtung zur Leitweglenkung nach Anspruch 1, wobei eine erste und mindestens eine zweite mögliche Zielvorrichtung (DNS2, SIP2, NTP2) einen DNS-Server (DNS = Domainnamen-System) oder einen SIP-Server (SIP = Sitzungsinitiationsprotokoll) oder einen NTP-Server (NTP = Netzwerkzeitprotokoll) umfassen.

10. Verfahren zur Leitweglenkung für ein Zugangsnetz (AN), wobei eine Vorrichtung zur Leitweglenkung (RO) eine Zielvorrichtung für eine von einer Sendevorrichtung (UD1A, UD1B, UD2) gesendete Nachricht (M1, M2) ermittelt, wobei die besagte Nachricht (M1, M2), welche eine Anycast-Adresse (AC1, AC2, AC3) enthält, einer ersten und mindestens einer zweiten möglichen Zielvorrichtung (DNS2, SIP2, NTP2) einer Gruppe von Zielvorrichtungen (GDNS, GSIP, GNTP) zugeordnet ist, **dadurch gekennzeichnet, dass** die besagte Vorrichtung zur Leitweglenkung (RO) die besagte erste Zielvorrichtung (DNS1, SIP1A, SIP1B, NTP1) oder die besagte mindestens eine zweite mögliche Zielvorrichtung (DNS2, SIP2, NTP2) aus der Gruppe von Zielvorrichtungen (GDNS, GSIP, GNTP) anhand von Zuordnungsdaten (AD) ermittelt, wobei die besagten Zuordnungsdaten (AD) einen Link (LI1, LI2) zwischen der besagten Sendevorrichtung (UD1A, UD1B, UD2) und der besagten Zielvorrichtung für die besagte Nachricht (M1, M2) umfassen, und dass die besagten Zuordnungsdaten (AD) Beglaubigungsdaten (CD1, CD2) enthalten und/oder anhand von Beglaubigungsdaten (CD1, CD2) eines Nutzers (U1, U2) der besagten Sendevorrichtung (UD1A, UD1B, UD2) ermittelt werden.

11. Modul zur Leitweglenkung (RM) für eine Vorrichtung zur Leitweglenkung (RO), wobei das Modul zur Leitweglenkung (RM) einen von einem Prozessor der Vorrichtung zur Leitweglenkung (RO) ausführbaren Programmcode enthält, wobei das Ausführen des Programmcodes die Vorrichtung zur Leitweglenkung (RO) befähigt, die Funktionen gemäß dem Verfahren nach Anspruch 10 durchzuführen.

## Revendications

1. Dispositif de routage pour un réseau d'accès (AN), dans lequel ledit dispositif de routage (RO) comprend des moyens de transfert (FM) capables de déterminer un dispositif de destination pour un message (M1, M2) envoyé par un dispositif d'envoi (UD1A, UD1B, UD2), ledit message (M1, M2) contenant une adresse d'envoi à la cantonade (AC1, AC2, AC3) assignée à un premier dispositif de destination possible (DNS1, SIP1A, SIP1B, NTP1) et à au moins un second dispositif de destination possible (DNS2, SIP2, NTP2) d'un groupe de dispositifs de destination (GDNS, GSIP, GNTP), **caractérisé en ce que** lesdits moyens de transfert (FM) sont capables de déterminer ledit premier dispositif de destination (DNS1, SIP1A, SIP1B, NTP1) ou ledit au moins un second dispositif de destination possible (DNS2, SIP2, NTP2) parmi ledit groupe de dispositifs de destination (GDNS, GSIP, GNTP) au moyen de données d'assignation (AD), lesdites données d'assignation (AD) comprenant une liaison (LI1, LI2) entre ledit dispositif d'envoi (UD1A, UD1B, UD2) et ledit dispositif de destination pour ledit message (M1, M2), et **en ce que** lesdites données d'assignation (AD) comprennent des données de certificat d'identité (CD1, CD2) et/ou sont déterminées au moyen de données de certificat d'identité (CD1, CD2) d'un utilisateur (U1, U2) dudit dispositif d'envoi (UD1A, UD1B, UD2).

2. Dispositif de routage selon la revendication 1, dans lequel lesdits moyens de transfert (FM) sont capables de surveiller ou de recevoir lesdites données de certificat d'identité (CD1, CD2) dudit utilisateur (U1, U2) au cours d'une procédure d'authentification.

3. Dispositif de routage selon la revendication 1, dans lequel lesdits moyens de transfert (FM) sont capables de communiquer avec un serveur (RADS), en particulier un serveur RADIUS, qui fournit au moins en partie lesdites données d'assignation (AD) au moyen d'un protocole d'authentification, d'autorisation et de comptabilité.

4. Dispositif de routage selon la revendication 1, dans lequel ledit premier dispositif de destination (DNS1, SIP1A, SIP1B, NTP1) fait partie d'un réseau (RN1) d'un premier fournisseur de services (NSP1) et ledit au moins un second dispositif de destination (DNS2, SIP2, NTP2) fait partie d'un réseau (RN2) d'un second fournisseur de services (NSP2).

5. Dispositif de routage selon la revendication 4, dans lequel les données d'assignation (AD) comprennent une première table de routage (RT1) assignée audit premier fournisseur de services (NSP1) et une seconde table de routage (RT2) assignée audit second fournisseur de services (NSP2), lesdites tables de routage (RT1, RT2) étant déterminées ou utilisées en fonction desdites données de certificat d'identité (CD1, CD2), ladite première table de routage (RT1) comprenant une information de transfert, en particulier une adresse, dudit premier dispositif de destination (DNS1, SIP1A, SIP1B, NTP1) et ladite seconde table de routage (RT2) comprenant une Information de transfert, en particulier une adresse, dudit au moins un second dispositif de destination (DNS2, SIP2, NTP2).

6. Dispositif de routage selon la revendication 4, dans lequel lesdits moyens de transfert (FM) comprennent un premier routeur virtuel (VR1) assigné audit premier fournisseur de services (NSP1) et un second routeur virtuel (VR2) assigné audit second fournisseur de services (NSP2), lesdits moyens de transfert (FM) étant capables de transférer ledit message (M1, M2) audit premier routeur virtuel (VR1) ou audit second routeur virtuel (VR2) en fonction desdites données de certificat d'identité (CD1, CD2) d'un utilisateur (U1, U2) dudit dispositif d'envoi (UD1A, UD1B, UD2).

7. Dispositif de routage selon la revendication 1, dans lequel lesdits moyens de transfert (FM) sont capables de remplacer ou modifier ladite adresse d'envoi à la cantonade (AC1, AC2, AC3) au moyen d'une adresse (ADNS1, ADNS2, AS1A, AS1B, AS2, ANTP1, ANTP2) du dispositif de destination déterminé respectif et/ou de transférer ledit message (M1, M2) par l'intermédiaire d'un port (P1, P2) assigné au dispositif de destination déterminé respectif.

8. Dispositif de routage selon la revendication 1, **caractérisé en ce qu'**il est un multiplexeur d'accès ou un routeur de périphérie du réseau d'accès (AN).

9. Dispositif de routage selon la revendication 1, dans lequel un premier et au moins un second dispositif de destination possible (DNS2, SIP2, NTP2) comprennent un serveur DNS (DNS = système de noms de domaine) ou un serveur SIP (SIP = protocole d'ouverture de session) ou un serveur NTP (NTP = protocole de temps de réseau).

10. Procédé de routage pour un réseau d'accès (AN), dans lequel un dispositif de routage (RO) détermine un dispositif de destination pour un message (M1, M2) envoyé par un dispositif d'envoi (UD1A, UD1B, UD2), ledit message (M1, M2) contenant une adresse d'envoi à la cantonade (AC1, AC2, AC3) assignée à un premier et au moins un second dispositif de destination possible (DNS2, SIP2, NTP2) d'un groupe de dispositifs de destination (GDNS, GSIP, GNTP), **caractérisé en ce que** ledit dispositif de routage (RO) détermine ledit premier dispositif de destination (DNS1, SIP1A, SIP1B, NTP1) ou ledit au moins un second dispositif de destination possible (DNS2, SIP2, NTP2) parmi ledit groupe de dispositifs de destination (GDNS, GSIP, GNTP) au moyen de données d'assignation (AD), lesdites données d'assignation (AD) comprenant une liaison (LI1, LI2) entre ledit dispositif d'envoi (UD1A, UD1B, UD2) et ledit dispositif de destination pour ledit message (M1, M2), et **en ce que** lesdites données d'assignation (AD) comprennent des données de certificat d'identité (CD1, CD2) et/ou sont déterminées au moyen de données de certificat d'identité (CD1, CD2) d'un utilisateur (U1, U2) dudit dispositif d'envoi (UD1A, UD1B, UD2).

11. Module de routage (RM) pour un dispositif de routage (RO), le module de routage (RM) comprenant un code de programme exécutable par un processeur du dispositif de routage (RO), l'exécution du code de programme permettant au dispositif de routage (RO) d'exécuter les fonctions selon le procédé de la revendication 10.
